# EUROPÄISCHE PATENTSCHRIFT

(11) **EP 2 036 790 B1**
(45) Veröffentlichungstag und Bekanntmachung des Hinweises auf die Patenterteilung: **07.11.2012**
(21) Anmeldenummer: 08016083.1
(22) Anmeldetag: 12.09.2008
(51) Int. Cl.: B60R 25/04

(54) **Zündschloss für ein Kraftfahrzeug**
Ignition lock for a motor vehicle
Interrupteur d'allumage pour un véhicule automobile

(30) Priorität: 13.09.2007 DE 102007043786; 13.09.2007 DE 102007043785
(43) Veröffentlichungstag der Anmeldung: 18.03.2009
(73) Patentinhaber: Marquardt GmbH, 78604 Rietheim-Weilheim (DE)
(72) Erfinder: Mattes,Johannes, 78567 Fridingen (DE); Hipp,Uwe, 72514 Inzigkofen-Engelswies (DE); Hamma,Andreas, 78532 Tuttlingen (DE); Vogler, Klaus-Peter, 78567 Erdingen (DE); Geiger,August, 78607 Talheim (DE); Eberhardt, Marcus, 78554 Aixheim (DE); Wahl, Peter, 78073 Bad Dürrheim (DE); Weber, Alfons, 78559 Gosheim (DE); Willmann, Hubert, 78199 Bräunlingen (DE); Geber, Michael, 73773 Aichwald (DE); Stummvoll, Armin, 73110 Hattenhofen (DE); Ohle, Jörn, 71272 Renningen (DE); Freyholdt, Uwe, 89537 Giengen (DE)
(74) Vertreter: Otten, Herbert

(56) Entgegenhaltungen:
- EP-A- 1 700 760
- DE-A1-102005 062 683
- DE-A1-102005 062 686

## Beschreibung

Die Erfindung betrifft ein Zündschloß nach dem Oberbegriff des Patentanspruchs 1.

In Kraftfahrzeugen befindet sich ein Zündschloßsystem, das unter anderem Schutz gegen unbefugte Benutzung bietet. Das Zündschloß und zugehörige Steuergeräte sind Bestandteile des Zündschloßsystems im Kraftfahrzeug.

Ein mit einem elektronischen Schlüssel zusammenwirkendes Zündschioßsystem in einem Kraftfahrzeug ist aus der DE 44 34 587 A1 bekannt. Das elektronische Zündschloß des Zündschloßsystems weist Schaltelemente und ein aus einer Ausgangsstellung in wenigstens eine Betätigungsstellung mittels des Schlüssels manuell bewegbares, als drehbeweglicher Rotor ausgestaltetes Betätigungselement auf. Das Betätigungselement wirkt in der jeweiligen Betätigungsstellung schaltend auf ein Schaltelement zur Signalerzeugung, und zwar von Bordnetzsignalen für das Kraftfahrzeug ein, wodurch wiederum bestimmte Funktionen des Kraftfahrzeugs, wie beispielsweise das Einschalten von Stromkreisen für Verbraucher, das Einschalten der Zündung, das Starten des Kraftfahrzeugs u. dgl., bewirkt werden.

Beim bekannten Zündschloß sind herkömmliche elektrische Schalter am Umfang des Rotors als Signalerzcugungsclemente verwendet. Das ist zum einen aufwendig sowie kostenintensiv. Zum anderen ist eine komplexe Anlenkung der Schalter am Umfang des Rotors notwendig, die auch eine gewisse Baugröße des Zündschlosses erfordert. In manchen Fällen reicht der zur Verfügung stehende Bauraum im Kraftfahrzeug nicht zur Aufnahme des Zündschlosses aus.

Aus der DE 10 2005 062 686 A1 oder der DE 10 2005 062 683 A1 ist weiter ein Fahrberechtigungssystem für ein Kraftfahrzeug mit einem einen drehbeweglichen Rotor aufweisenden Zündschloß bekannt. Mit dem als Betätigungselement dienenden Rotor wirkt ein Signalerzeugungselement zur Erzeugung von Bordnetzsignalen für das Kraftfahrzeug zusammen. Das Signalerzeugungselement besteht aus einem induktiven Winkelsensor, der die Signale in bestimmten Stellungen des Betätigungselements in der Art von Schaltpositionen des Betätigungselements erzeugt.

Schließlich ist in der EP 1 700 760 A2 ein Zündschloß gezeigt, bei dem der elektronische Schlüssel in ein Trägerelement einführbar ist. Das Trägerelement ist mittels des Schlüssels linearverschieblich in Bewegungsstellungen bewegbar, in denen Funktionen des Kraftfahrzeugs ausgelöst werden. Einzelne Bewegungsstellungen sind als Rastpositionen ausgebildet, die durch einen Raststift am Trägerelement, eine Rastkurve sowie eine Feder erzeugt werden.

Der Erfindung liegt die Aufgabe zugrunde, das Zündschloß im Hinblick auf eine einfachere Ausgestaltung weiterzubilden, insbesondere dessen Signalerzeugungselement weiterzubilden sowie die Rastung zu vereinfachen.

Diese Aufgabe wird bei einem gattungsgemäßen Zündschloß durch die kennzeichnenden Merkmale des Anspruchs 1 gelöst.

Bisher wurden die Rastungen im Zündschloß durch eine außwendige Rollenrastung realisiert. Beim erfindungsgemäßen Zündschloß besteht das Signalerzeugungselement aus einem Winkelencoder, insbesondere in der Art eines Drehwinkelsensors. Die Rastung wird nunmehr durch eine Blattfeder realisiert, die die Rastung in den verschiedenen Positionen des Betätigungselements ermöglicht sowie ebenso auch die Rückstellung des Betätigungselements aus der "Motor Start"-Stellung. Vorteilhafterweise ist dadurch ein kompaktes sowie funktionssicheres Zündschloß geschaffen und es werden durch diese Maßnahme insbesondere noch folgende Vorteile erzielt:
- Kosteneinsparung durch weniger Teile und
- einfachere Montage.
Weitere Ausgestaltungen der Erfindung sind Gegenstand der Unteransprüche.

Das erfindungsgemäße Zündschloß kann sehr einfach in unterschiedlichen Varianten nach Bedarf für den jeweiligen Kraftfahrzeugtyp realisiert werden. So kann zu diesem Zweck der Winkelencoder die Winkelstellung absolut ausgeben. Beim Erreichen bestimmter Winkelstellungen des Betätigungselements werden dann vom Zündschloß die zugehörigen Funktionen ausgelöst. Desweiteren erzeugt der Winkelencoder Signale in bestimmten Stellungen des Betätigungselements, die also in der Art von Schaltpositionen des Betätigungselements wirken. In einfacher Art und Weise können die Schaltpositionen des Winkelencoders mittels Software festlegbar sein. Es kann das Signalerzeugungselement weiter aus mindestens einem elektrischen Schaltelement und/oder einem Sensorelement, das von einer am Betätigungselement angeordneten Kurvenscheibe betätigt wird, bestehen. Zur Steigerung der Funktionssicherheit kann mindestens ein elektrischer Schalter zusätzlich zum Signalerzeugungselement mit dem Betätigungselement zusammenwirken. Dadurch ist eine Redundanz für mindestens ein Bordnetzsignal und/oder zur Überprüfung der Funktion des Winkelencoders in einfacher Weise ermöglicht.

Ein Winkelencoder kann unter Umständen einen so hohen Stromverbrauch aufweisen, daß er für den Einsatz in einem Kraftfahrzeug im Sleepmodus nicht ganz unproblematisch ist. In diesem Fall kann eine Optimierung des Ruhestromverbrauchs durch dynamische Ansteuerung des Winkelencoders erfolgen. Der Winkelencoder kann im Ruhezustand zur Minimierung des Ruhestroms getaktet betrieben werden. Darüberhinaus läßt sich der Winkelencoder über eine stromsparende Taktschaltung, beispielsweise eine SBC, einen Timer, eine Taktschaltung, die beispielsweise mittels einer Pulsweitenmodulation (PWM) arbeitet, o. dgl. ansteuern, Da das Zündschloß aber durch Stecken des Schlüssels in eine Aufnahme am Zündschloß aufgeweckt werden kann, darf die Taktung nicht beliebig gewählt werden. Deshalb ist zweckmäßigerweise eine der Situation angepasste dynamische Taktung vorzusehen. Die Taktschaltung wird also entsprechend der notwendigen Reaktionszeit so eingestellt, daß der Stromverbrauch auf ein Minimum gesenkt wird. Ebenso wird ein Sensor ausgewählt, der eine möglichst kurze Auswertezeit hat, damit die aktive Zeit des Sensors möglichst klein bleibt, beispielsweise kleiner als 250 µs beträgt.

In kostengünstiger und dennoch sehr funktionssichtrer Art und Weise läßt sich der Winkelencoder als Magnetfeldsensor, insbesondere in der Art eines Hallsensors, ausgestalten. In diesem Fall ist ein Magnet mit dem Betätigungselement gekoppelt. In einfacher Weise kann der Magnet an einer Drehscheibe angeordnet sein, wobei die Drehscheibe mit dem Rotor gekoppelt ist. Desweiteren läßt sich in fertigungstechnisch einfacher Weise nach Montage des Magneten dessen Nullstellung in der Ausgangsstellung des Betätigungselements über einen Softwareabgleich, beispielsweise beim Endprüfen als Abschluß der Herstellung des Zündschlosses, kalibrieren. Zur Vereinfachung der Montage des Magneten wird somit die Nullstellung über einen Softwareabgleich beim Endprüfen kalibriert, so daß der Magnet in jeder beliebigen Drehposition aufgesetzt werden kann.

Zur Steigerung der Funktionssicherheit sowie auch zur Steigerung der Ergonomie für die Betätigung des Zündschlosses kann in einfacher Weise das Signalerzeugungselement mit dem Betätigungselement über ein Getriebe zusammenwirken. Das Getriebe ist in der Art einer einfachen Drehscheibe, in der Art eines Zahnradantriebs o. dgl. mit dem Betätigungselement, insbesondere mit dem Rotor, gekoppelt. Mit Hilfe des Getriebes lassen sich kleine Drehwinkel des Rotors entsprechend übersetzen, was die Signalerzeugung in den jeweiligen Betätigungsstellungen vereinfacht. Im Falle eines Zahnradantriebes als Getriebe bietet es sich weiter an, einen Magnet in der Art eines Targets an einem Zahnrad zur Erzeugung eines speziellen Magnetfeldes für die Aktivierung des Winkelencoders aus dem Ruhezustand anzuordnen.

Zur Betätigung des Zündschlosses durch manuelle Bewegung des Betätigungselements durch den Benutzer ist der Schlüssels in eine Aufnahme am Betätigungselement einsteckbar. Bisher werden in elektrischen Zündschlössern die Steckbewegung und die Drehbewegung mit verschiedenen Sensoren bzw. mechanischen Schaltern separat ausgewertet. Ziel ist es, die komplette Auswertung der verschiedenen Steckpositionen, nämlich "Schlüssel steckt" und "Schlüsselabzug", und der Drehstellungen des Rotors, nämlich die sogenannten Stellungen 0, H0, 15R, 15, 50, in der verschiedene Funktionen des Kraftfahrzeugs ausgelöst werden, mit einem Sensor abzudecken. Es gibt verschiedene Sensoren, die jede beliebige Drehposition eindeutig erkennen können. Somit ist eine Möglichkeit zu finden, um die zwei Steckpositionen in eine Drehbewegung umzusetzen. Dies wird in weiterer Ausgestaltung dadurch realisiert, daß über eine Kulisse die Steckbewegung auf die Drehscheibe und/oder die Kurvenscheibe übertragen wird. Erfindungsgemäß wirkt eine Kulisse mit der Drehscheibe und/oder mit der Kurvenscheibe zusammen, derart daß die Steckbewegung des Schlüssels auf die Drehscheibe übertragen wird.

Es werden dabei insbesondere folgende Vorteile erzielt:
- Kosteneinsparung durch Reduzierung der Bauteile und
- je nach Einsatz der Bauteile können die Schaltpositionen durch Software jederzeit geändert werden, was eine einfache Anpassung des Zündschlosses an verschiedene Kraftfahrzeugtypen ermöglicht.

Das Zündschloß soll nur mittels eines Schlüssels mit der richtigen Kontur betätigt werden können und nicht beispielsweise mit dem Finger des Benutzers. Das Gleiche gilt für das Drehen im Zündschloß. Gleichzeitig muß der Schlüssel im Zündschloß gehalten werden, so daß der Schlüssel nur entnonnnen werden kann, wenn eine definierte Haltekraft überwunden wird. Die Stecksperre wird in weiterer Ausbildung so realisiert, daß nur ein Schlüssel in die Aufnahme am Betätigungselement gesteckt werden kann, der mechanisch die richtige Kontur hat. Die Drehsperre ist so realisiert, daß ein Drehen nur in der Endposition des in die Aufnahme gesteckten Schlüssels möglich ist. Vorher wird durch eine Kontur das Drehen verhindert. Die Rastung des Schlüssels in der Aufnahme kann in einfacher Weise durch eine Ringfeder erfolgen. Im gedrehten Zustand des Betätigungselements wird beispielsweise durch eine Verengung im Gehäuse das Abziehen des Schlüssels aus der Aufnahme zusätzlich verhindert.

Es werden bei dieser Ausbildung insbesondere folgende Vorteile erzielt:
- Reduzierung der Teileanzahl von beispielsweise bisher fünf Kunststoff-Teilen und vier Druckfedern auf nurmehr zwei Kunststoff-Teile, einen Vierkantbolzen und eine Ringfeder,
- einfachere Montage und
- eine zusätzliche Sicherheit durch die Stecksperre speziell bei KeylessGo-Fahrzeugen.

Für die Energieübertragung zum Schlüssel wird eine Spule im Zündschloß verwendet. Diese Spule muß den in die Aufnahme gesteckten Schlüssel im Zündschloß überdecken. Je besser die Überdeckung der Spule im Zündschloß mit der Spule im Schlüssel übereinstimmt umso besser ist der Wirkungsgrad der Energieübertragung. Bisher wurde die Spule auf dem Zylindervorderteil gewickelt und als zusätzliches Bauteil verbaut. Ziel einer weiteren Gestaltung ist es, diese Spule und das Zylindervorderteil zu kombinieren. Hierfür wird ein einfacher Spulenträger gespritzt, auf dem die Spule umwickelt wird und anschließend in einem zweiten Spritzvorgang wird dann das Gehäusevorderteil für das Zündschloß um den Spulenkörper plus aufgewickelter mechanischer Spule umspritzt.

Es werden dabei insbesondere folgende Vorteile erzielt:
- ein komplettes Bauteil wird eingespart,
- einfachere Montage,
- optimalere Kräfteverhältnisse, da eventuell ausgeübte Mißbrauchskräfte direkt auf das Gehäuse übertragen werden ohne Schaden anzurichten und
- optimalere Plazierung der Spulenposition.

Bei den heutigen Zündschlössern wird das Zylindervorderteil (ZVT), in dem das Betätigungselement wenigstens teilweise angeordnet ist, aufwendig in einem extra Arbeitsgang mit einer Leiterplatte (PCB) für die Elektronik des Zündschlosses verlötet. Die Lötverbindung kann durch die elektrische Verbindung bewirkende Steckhülsen auf der Leiterplatte ersetzt werden, um eine einfachere Montage zu gestatten. Diese Steckhülsen können als SMD-Bauteile aufgebracht und/oder als Actionpins eingepreßt werden.

Bei den vorgeschriebenen Falltests für das Zündschloß reißt immer wieder die Verrasterung der Leiterplatte vom Zylinderhinterteil, in dem das Betätigungselement wenigstens teilweise angeordnet ist, ab. Um hier in einfacher Weise Abhilfe zu schaffen, werden die Rasthaken konstruktiv in ihrer Art und Weise wesentlich weicher ausgebildet. Mittels einer zusätzlichen Verklemmung der Rasthaken mit dem Gehäuschintcrteil des Zündschlosses wird das komplette Spiel neutralisiert, so daß die Leiterplatte sicher am Zylinderhinterteil fixiert ist.

Alle heutigen Zündschlösser werden mit zwei Schrauben im Gehäusevorderteil des Zündschlosses aufwendig verschraubt. Bisher notwendig ist diese Art der Befestigung zur Aufnahme der Steek- und/oder Zieh- und/oder Drehkräfte über den ganzen Temperaturbereich. Die zwei Schraubverbindungen werden in weiterer Ausgestaltung nunmehr ersetzt, indem das Zündschloß über zwei Stifte mit Preßrippen am Gehäusevorderteil des Zündschlosses befestigt ist, und zwar im wesentlichen spielfrei zentriert wird. Seitliche Rasthaken am Zylinderhinterteil können an Hinterschnitten im Gehäusevorderteil eingreifend zum Tragen kommen. Das Zündschloß wird vorteilhafterweise bei dieser Ausgestaltung spielfrei gehalten und die Steck- und/oder Verdrehkräfte werden gleichmaßig nach außen abgeleitet.

Eine weitgehend allgemein gültige Festlegung des Schlüsselsteckvorgangcs beim Zündschloß besagt, daß das "Schlüssel-Steckt"-Signal ca. 2,50 mm vor dem "Schlüssel-Abzug"-Signal kommen sollte. Bei einer in der Aufnahme am Betätigungselement angeordneten Hülse, die durch das Einstecken des Schlüssels bewegt wird und die gegenüber der bisherigen Ausgestaltung unverändert bleibt, müssen die Signale indirekt an der Hülsenbewegung mit beispielsweise ca. 13,2 mm Steckweg abgegriffen werden. Dabei sollen in weiterer Ausgestaltung die Signalbewegungen um 90° umgelenkt auf SMD-Schiebeschalter wirken. Der Schaltweg eines Schiebeschalters hat komplett in etwa 1,7 mm, wobei der Einschaltpunkt bei ca. 0,6 mm liegt. Es gilt dabei folgende Probleme an der Hülsenbewegung zu lösen:
- der Signalabgriffspunkt an der Hülse liegt für beide Signale an der maßlich gleichen Position,
- die relativ großen Toleranzen der Hülsenbewegung sind in relativ toleranzkompensierte Signale umzuwandeln und
- der Steckweg von ca. 13,2 mm ist in Schaltwege von max. 1,7 mm umzuwandeln.

Zur Lösung kommen an den beiden, am Betätigungselement angreifenden Rasthaken von der Hülse zwei Schieber mit unterschiedlichen Stößellängen zum Einsatz. Diese Schieber greifen mittels Führungsdomen in die jeweiligen zugehörigen Kulissen von Kurvenschiebern ein. Dadurch wird die Hülsenbewegung zur Erzeugung von Schaltsignalen um jeweils in etwa 90° nach außen umgelenkt. Durch die maßlich genaue Kulisse im Kurvenschieber wird nur dieser Weg von ca. 1,6 mm ausgeführt, obwohl die Hülse noch mehr Bewegung erzeugt. Durch diesen Freilauf wird auch der Übcrhub von in etwa 2,5 mm zwischen den Schaltsignalen "Schlüssel-Steckt" und "Schlüssel-Abzug" realisiert. Vorteilhafterweise erhält man bei dieser Ausgestaltung somit exakt definierte Schaltsignale.

Die erforderlichen Schaltsignale werden beim erfindungsgemäßen Zündschloß während des Steck- und/oder Drehvorgangs des Schlüssels erzeugt. Dabei müssen an genauen Drehwinkelstellungen definierte Schaltsignale vorliegen. Zur Reduzierung des Einbauvolumens werden in weiterer Ausbildung spezielle Schiebeschalter eingesetzt, die entsprechend anzusteuern sind. Hierzu werden mittels der Kurvenscheibe, die am Betätigungselement, also insbesondere am Rotor, aufgesteckt ist, die Schalter funktionsgerecht angelenkt. Durch die Nut in der Scheibe kann das Signal mit der erforderlichen Genauigkeit erzeugt und beim entsprechenden Schaltwinkel durch Betätigung des jeweiligen Schalt- und/oder Sensorelements zur Verfügung gestellt werden. Die Schiebeschalter werden durch die Nut zwangsgeführt betätigt. Vorteilhafterweise werden alle Schaltsignale mittels weniger, bespielsweise nur durch drei Schiebeschalter erzeugt. Dadurch ist wiederum ein platzsparender und/oder kostengünstiger Aufbau des Zündschlosses möglich.

Für die Schalt- und/oder Kurvenscheibenmontage kann zusätzlich ein Lichtleiter als Sperrstift für die Verrastung verwendet werden. Dieser Lichtleiter soll in weiterer Gestaltung entfallen und die Befestigung der Kurvenscheibe soll wesentlich robuster ausgelegt werden. Hierbei entfällt das Verstemmen der Rasterung von der Schalt- und/oder Kurvenscheibe mittels des Lichtleiters. Zu diesem Zweck wird die Verrastung der Kurvenscheibe mit dem Zylinderhinterteil nach außen an den Umfang der Kurvenschcibe gelegt und wesentlich besser ausgelegt. Notwendig kann dafür sein, die Druckscheibe mit ihrer Rückstellfeder entfallen zu lassen. Erreicht wird dies durch das Verlegen der Schaltschieber für die Betätigung der Schalt- und/oder Sensorelemente in die Kurvenscheibe. Die Ausbildung der Verrasterung senkt dabei vorteilhafterweise die Toleranzkette zur Schalteranlenkung um ein gewisses Teil.

Zu einer besonders bevorzugten Ausgestaltung ist noch nachfolgendes zu erwähnen. Bisher wurde die Positionserkennung durch mehrere mechanische Schalter oder andere Sensoren durchgeführt, die durch ihre Position oder der Position der Betätiger für die Schaltposition fest vorgegeben sind. Dies hat zur Folge, daß für jede Schaltposition ein Schalter und/oder Sensor notwendig ist. Weiterhin kann der Schaltpunkt nur durch den mechanischen Aufbau verändert werden. Zur Vermeidung dieser Nachteile erfolgt erfindungsgemäß die Verwendung eines Winkelencoders, der die Winkelstellung absolut ausgibt Zur Vereinfachung der Montage des Magneten wird die Nullstellung über einen Softwareabgleich am Endprüfen kalibriert. Somit kann der Magnet in jeder beliebigen Drehposition aufgesetzt werden. Die Schaltposition kann mittels Software ebenfalls für jede Variante nach Bedarf festgelegt werden. Der Winkelencoder wird über eine stromsparende Taktschaltung angesteuert, beispielsweise eine SBC(System Basis Chip)-Schaltung, einen Timer oder eine Taktschaltung. Die Taktschaltung wird entsprechend der notwendigen Reaktionszeit so eingestellt, daß der Stromverbrauch auf ein Minimum gesenkt wird. Ebenso muß ein Sensor ausgewählt werden, der eine möglichst kurze Auswertezeit hat, damit die aktive Zeit möglichst klein bleibt, beispielsweise kleiner als 250 µs.

Die mit der Erfindung erzielten Vorteile bestehen insbesondere in Nachfolgendem:
- Niedriger Stromverbrauch,
- Optimale Reaktionszeit,
- Dynamische Anpassung an die aktuelle Situation im Fahrzeug, beispielsweise Fahrzeug gesichert, Fahrzeug ausgeschaltet aber nicht gesichert, Schlüssel steckt o. dgl.,
- Kostenoptimierter Aufbau, sowie
- Berührungslos arbeitend, verschleißfrei und unempfindlich gegenüber Schmutz.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: das Zündschloßsystem in schematischer Ansicht,
- Fig. 2: eine Detailansicht einer Dreh- oder Kurvenscheibe am Betätigungselement des Zündschloßsystems,
- Fig. 3: eine Detailansicht einer Stecksperre am Betätigungselement,
- Fig. 4: eine Blattfeder am Betätigungselement als Einzelteil,
- Fig. 5: eine Hülse am Betätigungselement in Zusammenwirken mit Schaltelementen und
- Fig. 6: eine Kurvenscheibe am Betätigungselement zum Anlenken von Schaltelementen.

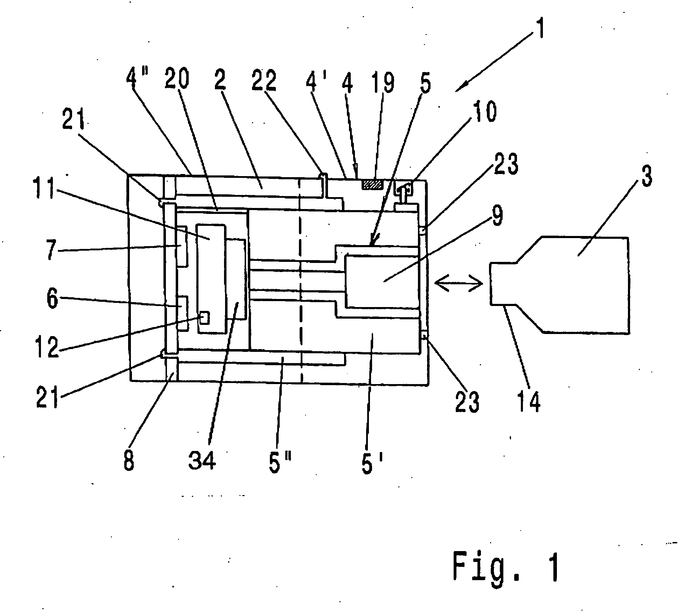

In Fig. 1 ist ein elektronisches Zündschloß 2 für ein mit einem elektronischen Schlüssel 3 zusammenwirkendes Zündschloßsystem 1 in einem Kraftfahrzeug zu sehen. Das im Armaturenbrett o. dgl. des Kraftfahrzeugs eingebaute Zündschloß 2 besitzt ein Gehäuse 4.

Im Gehäuse 4 befindet sich ein aus einer Ausgangsstellung in Betätigungsstellungen bewegbares Betätigungselement 5, das vorliegend als drehbeweglicher Rotor ausgestaltet ist. Der Rotor 5 ist mittels des Schlüssels 3 vom Benutzer drehbar, wozu der Schlüssel 3 in eine Aufnahme 9 am Rotor 5 einsteckbar ist. Weiter ist im Gehäuse 4 ein Signalcrzeugungslement 6 angeordnet. Das Betätigungselement 5 wirkt in den Betätigungsstellungen mit dem Signalerzeugungselement 6 zur Erzeugung von Signalen zusammen. Bei den Signalen handelt es sich um Bordnetzsignale für das Kraftfahrzeug, die wiederum zur Auslösung von Funktionen des Kraftfahrzeugs, wie zur Einschaltung der Zündung, zum Starten des Kraftfahrzeugs oder sonstiger bestimmungsgemäßer Funktionen, dienen.

Das Signalerzeugungselement 6 besteht aus einem Winkelencoder, der insbesondere in der Art eines Drehwinkelsensors ausgestaltet ist. Der Winkelencoder 6 kann die Winkelstellung, in der sich der Rotor 5 befindet, absolut ausgeben. Der jeweilige vom Rotor 5 eingenommene Winkel wird dann vom Winkelencoder 6 an einen Mikroprozessor 7 zur Weiterverarbeitung übergeben. Der Winkelencoder 6 sowie der Mikroprozessor 7 sind auf einher Leiterplatte 8 im Gehäuse 4 angeordnet. In bestimmten Stellungen des Betätigungselements 5, die anhand des vom Winkelencoders 6 ermittelten Drehwinkels detektiert werden, werden Signale erzeugt, womit es sich bei diesen Stellungen des Betätigungselements 5 um die entsprechenden Schaltpositionen des Zündschlosses 2 handelt. Die Signale werden über das Bordnetz, gegebenenfalls nach entsprechender Aufbereitung durch den Mikroprozessor 7, an die Steuergeräte im Kraftfahrzeug zur Auslösung der zugehörigen Funktionen weitergeleitet.

Die Schaltpositionen des Winkelencoders 6, in denen die entsprechenden Signale erzeugt werden, sind mittels Software festlegbar. Damit können verschiedene Varianten des Zündschlosses 2 nach Bedarf hergestellt werden. Zusätzlich zum Signalerzcugungselement 6 kann mindestens ein elektrischer Schalter 10 mit dem Betätigungselement 5 zusammenwirken, wodurch eine Redundanz für mindestens ein Bordnetzsignal und/oder eine Überprüfung der Funktion des Winkelencoders 6 ermöglicht ist.

Der Winkelencoder 6 kann über eine stromsparende Taktschaltung, wie eine SBC-Schaltung, einen Timer, eine Taktschaltung o. dgl. angesteuert werden. Die Taktschaltung, die beispielsweise mit einer Pulsweitenmodulation (PWM) arbeiten kann, wird entsprechend der notwendigen Reaktionszeit so eingestellt, daß der Stromverbrauch des Winkelencoders 6 auf ein Minimum gesenkt wird. Desweiteren besitzt der Winkelencoder 6 eine möglichst kurze Auswertezeit, damit die aktive Zeit für den Winkelencoder 6 möglichst klein bleibt, beispielsweise kleiner als 250 µs. Der Winkelencoder 6 wird desweiteren auch im Ruhezustand zur Minimierung des Ruhestroms getaktet betrieben.

Bevorzugterweise arbeitet der Winkelencoder 6 auf magnetischer Basis. Hierzu ist gemäß Fig. 1 ein Magnet 12 mit dem Betätigungselement 5 gekoppelt, indem der Magnet 12 an einer mit dem Rotor 5 gekoppelten Drehscheibe 11 angeordnet ist. Der Winkelencoder 6 ist dann als Magnetfeldsensor, und zwar in der Art eines Hallsensors ausgestaltet.

Da die Drehscheibe 11 einen gegenüber dem Rotor 5 größeren Außenumfang aufweist, wirkt die Drehscheibe 11 in der Art eines Getriebes zur Übersetzung der Drehbewegung des Rotors 5. Der Winkelencoder 6 kann mit dem Betätigungselement 5 auch über ein sonstiges Getriebe 11 zusammenwirken. Das Getriebe 11 ist beispielsweise in der Art eines Zahnradantriebs o. dgl. mit dem Rotor 5 gekoppelt. Weiter kann ein Magnet 12 als Target an einem Zahnrad 11 zur Erzeugung eines speziellen Magnetfeldes für die Aktivierung des Winkelencoders 6 aus dem Ruhezustand sowie zur Festlegung der als Betätigungsstellungen dienenden Winkelstcllungen des Rotors 5 angeordnet sein.

Zur einfachen Montage des Magneten 12 wird dessen Nullstellung über einen Softwareabgleich, beispielsweise beim Endprüfen des Zündschlosses 2, kalibriert. Somit kann der Magnet 12 in jeder beliebigen Drehposition der Drehscheibe 11 und/oder des Zahnrades 11 aufgesetzt werden.

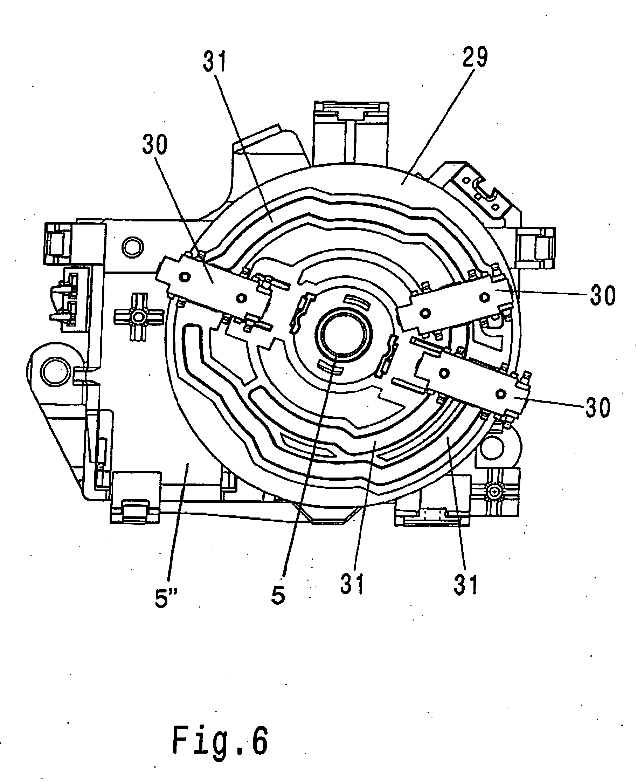

Zusätzlich zum Winkelencoder 6 oder auch alternativ anstelle des Winkelencoders 6 kann das Signalerzeugungselement aus mindestens einem elektrischen Schaltelement 30 bestehen, das von einer am Betätigungselement 5 angeordneten Kurvenscheibe 29 betätigt wird. Eine derartige Ausgestaltung des Signalerzeugungselements ist in Fig. 6 zu sehen.

Selbstverständlich kann bei dieser Ausgestaltung anstelle eines elektrischen Schaltelements 30 auch ein sonstiges Sensorelement verwendet werden.

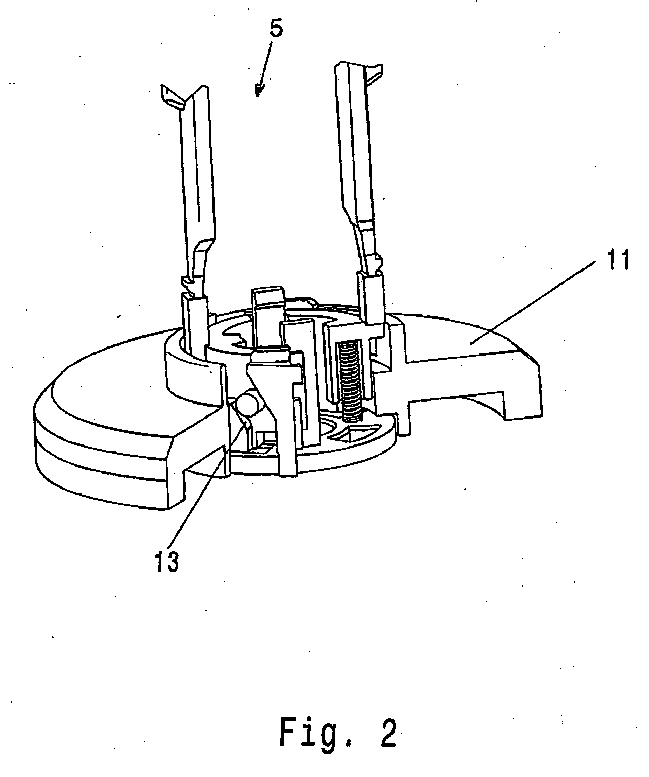

Wie bereits erwähnt, ist der Schlüssel 3 in die Aufnahme 9 am Rotor 5 einsteckbar. Das Einführen und/oder das Herausziehen des Schlüssels 3 in die Aufnahme 9 erzeugt ein Signal im Zündschloß 2. Hierzu wird das Stecken sowie das Herausziehen des Schlüssels 3 in die Drehung der Drehscheibe 11 und/oder der Kurvenscheibe 29 um einen gewissen Drehwinkel übertragen, indem eine Kulisse 13 mit der Drehscheibe 11 und/oder der Kurvenscheibe 29 zusammenwirkt, wie anhand von Fig. 2 gezeigt ist. Folglich wird die Steckbewegung des Schlüssels 3 auf die Drehscheibe 11 übertragen.

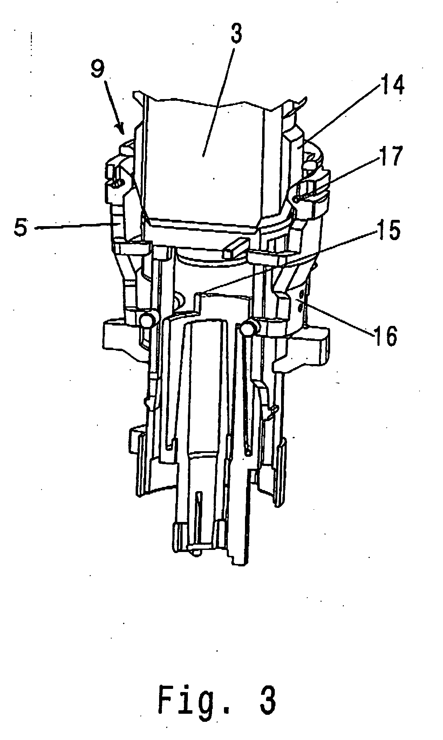

Damit der Rotor 5 nur mit einem Schlüssel 3 gedreht werden kann, der die vorgegebene Kontur 14 (siehe Fig. 1) für die Aufnahme 9 aufweist, wirkt das Betätigungselement 5 mit einer in Fig. 3 gezeigten Stecksperre 15 derart zusammen, daß nur ein Schlüssel 3 in die Aufnahme 9 am Betätigungselement 5 eingeführt werden kann, der mechanisch die richtige Kontur 14 aufweist. Das Betätigungselement 5 wirkt mit einer Drehsperre 16 derart zusammen, daß ein Drehen des Rotors 5 nur in der Endposition des in die Aufnahme 9 gesteckten Schlüssels 3 ermöglicht ist. Zuvor wird durch eine entsprechende Kontur das Drehen verhindert. Der gesteckte Schlüssel 3 ist durch eine Ringfeder 17 in der Aufnahme 9 verrastet. Zusätzlich kann das Abziehen des Schlüssels 3 aus der Aufnahme 9 im gedrehten Zustand des Betätigungselements 5 in an sich bekannter Weise durch eine Verengung im Gehäuse 4 (siehe Fig. 1) verhindert sein, was jedoch nicht weiter gezeigt ist.

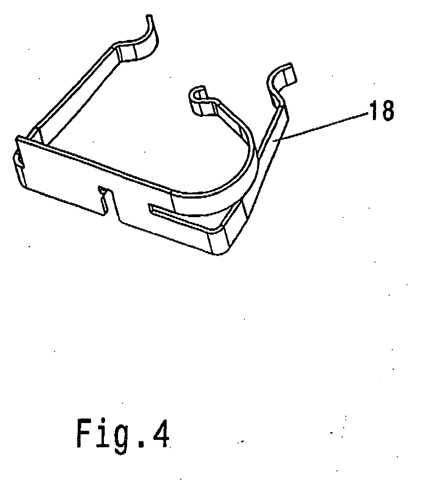

Das Betätigungselement 5 wirkt mit einer Blattfeder 18, die in Fig. 4 zu sehen ist, zusammen. Dadurch ist eine Rastung des Rotors 5 in verschiedenen Positionen ermöglicht. Außerdem bewirkt die Blattfeder 18 eine Rückstellung des Rotors 5 aus der "Motor Start"-Stell ung.

Wie weiter in Fig. 1 zu sehen ist, ist im Zündschloß 2 eine Spule 19 zur Energieübertragung auf den Schlüssel 2 angeordnet, wenn der Schlüssel 2 in der Aufnahme 9 befindlich ist. Das Gehäuse 4 ist zweiteilig ausgestaltet und besteht aus einem Gehäusevorderteil 4' und einem Gchäuschinterteil 4". Der einfachen Herstellung halber wird die Spule 19 auf einem gespritzten Spulenträger umwickelt und in einem weiteren Spritzvorgang wird dann der Spulenkörper mit aufgewickelter Spule 19 mit dem Gehäusevorderteil 4' für das Zündschloß 2 umspritzt.

Wie ebenfalls in Fig. 1 gezeigt ist, ist der Rotor 5 wenigstens teilweise in einem Zylindervorderteil 5' und einem Zylinderhinterteil 5" angeordnet. Das Zylindervorderteil 5' ist mittels Steckhülsen 20 mit der Leiterplatte 8 elektrisch verbunden. Die Steckhülsen 20 können als SMD- Bauteile und/oder als eingepreßte Actionpins ausgestaltet sein. Die Leiterplatte 8 ist mittels Rasthaken 21 auf dem Zylinderhinterteil 5" verrastet. Die Rasthaken 21 sind in weicher Art ausgebildet, wodurch die Gefahr des Abreißcns der Rasthaken 21 verringert ist. Desweiteren sind die Rasthaken 21 mit dem Gehäusehinterteil 4" des Zündschlosses 2 verklemmt. Das eigentliche Zündschloß 2 ist mittels zwei Stiften 23, die Preßrippen aufweisen, am Gehäusevorderteil 4' zentriert befestigt. Weiter greifen seitliche Rasthaken 22 am Zylinderhinterteil 5" an Hinterschnitten im Gehäusevorderteil 4' ein. Dadurch wird das Zündschloß 2 im wesentlichen spielfrei gehalten, indem die Steck-und/oder Verdrehkräfte gleichmäßig nach außen abgeleitet werden.

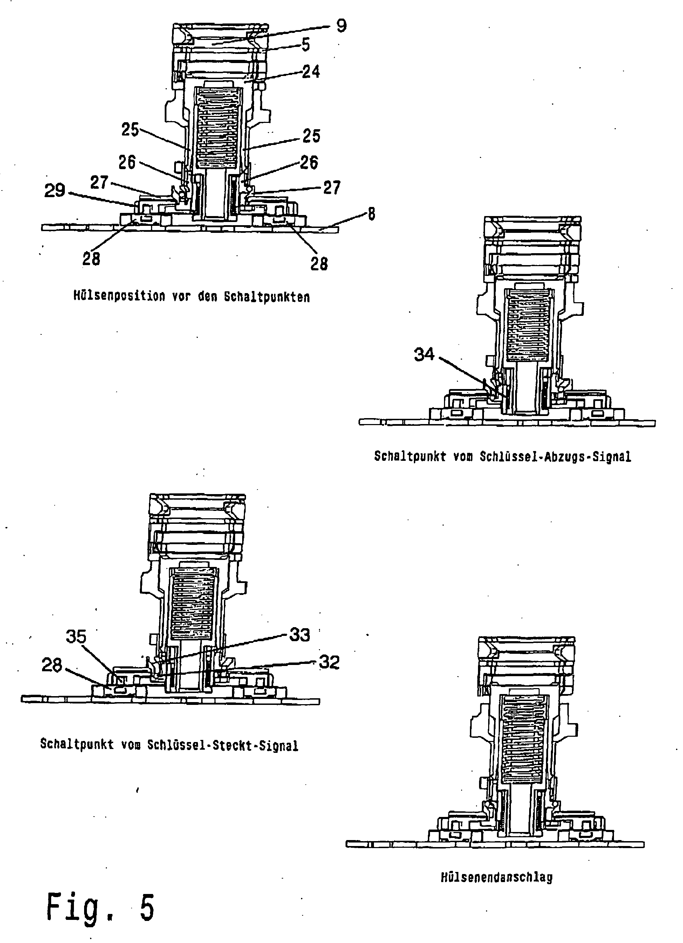

Wie in Fig. 5 zu sehen ist, ist in der Aufnahme 9 am Betätigungselement 5 eine bewegliche Hülse 24 angeordnet, die durch das Einstecken des Schlüssels 3 bewegt wird. Die Hülse 24 weist wenigstens zwei, am Betätigungselement 5 angreifende Rasthaken 25 auf. Die Rasthaken 25 wirken mit zwei Schiebern 26 mit unterschiedlichen Stößellängen zusammen. Die Schieber 26 greifen mittels Führungsdomen 32 in zugehörige Kulissen 33 von Kurvenschiebern 27 ein, derart daß die Bewegung der Hülse 24 zur Erzeugung von Schaltsignalen mittels Schalter 28 um in etwa 90° nach außen umgelenkt wird. Die Betätigung des jeweiligen Schalters 28 erzeugt dann das "Schlüssel-steckt"-Signal sowie das "Schlüssel-Abzug"-Signal, wie in den Teilfiguren der Fig. 5 gezeigt ist.

Wie in Fig. 6 zu sehen ist, ist am Betätigungselement 5, also am Rotor, eine Kurvenscheibe 29 zum Betätigen von Schaltelementen 30 angeordnet. Dazu ist die Kurvenscheibe 29 mittels eines Flansches 34 (siehe Fig. 5) auf den Rotor 5 aufgesteckt. Ebenso kann die in Fig. 1 gezeigte Drehscheibe 11 mittels eines Flansches 34 am Betätigungselement 5 aufgesteckt sein. Wie man weiter der Fig. 6 entnimmt, sind die Schaltelemente 30 über Nuten 31 in der Kurvenscheibe 29 zur Betätigung angelenkt. Bei den Schaltelementen 30 handelt es sich um Schiebeschalter, deren Schaltschieber zur Betätigung durch die Nuten 31 zwangsgeführt sind. Die Schaltschieber der Schaltelemente 30 sind insoweit in Fig. 6 nicht zu sehen, da die Kurvenscheibe 29 von deren Unterseite gezeigt ist. Die Kurvenscheibe 29 ist am Außenumfang mit dem Betätigungselement 5 verrastet, was jedoch nicht weiter detailliert ist. Ebenso wie die Schaltelemente 30 sind auch die Schalter 28 als Schiebeschalter mit einem Schaltschieber 35 (siehe Fig. 5) als Betätigungsorgan ausgestaltet.

Die Erfindung ist nicht auf das beschriebene und dargestellte Ausführungsbeispiel beschränkt. Sie umfaßt vielmehr auch alle fachmännischen Weiterbildungen im Rahmen der durch die Patentansprüche definierten Erfindung. So kann anstelle des im Ausführungsbeispiel beschriebenen drehbaren Rotors 5 im Zündschloß 2 auch ein verschiebbares oder in sonstiger Weise bewegbares Betätigungselement verwendet werden. Weiter kann die Erfindung nicht nur an Zündschlössern für beliebige Fahrzeuge Verwendung finden, sondern auch an sonstigen Schlössern, beispielsweise solchen die an Immobilien, Arbeitsmaschinen, Werkzeugmaschinen o. dgl. angeordnet sind, eingesetzt werden. Schließlich lässt sich die Erfindung auch bei allen Steuergeräten, die im "Slccp-Mode" Eingänge überwachen müssen, einsetzen.

### Bezugszeichen-Liste:

- 1:: Zündschloßsystem
- 2:: Zündschloß
- 3:: Schlüssel
- 4:: Gehäuse (von Zündschloß)
- 4':: Gehäusevorderteil
- 4":: Gehäusehinterteil
- 5:: Betätigungselement / Rotor
- 5':: Zylindervordertil
- 5":: Zylinderhinterteil
- 6:: Signalerzeugungselement / Winkelencoder
- 7:: Mikroprozessor
- 8:: Leiterplatte
- 9:: Aufnahme
- 10:: Schalter
- 11:: Getriebe / Zahnrad / Drehscheibe
- 12:: Magnet
- 13:: Kulisse
- 14:: Kontur (am Schlüssel)
- 15:: Stecksperre
- 16:: Drehsperre
- 17:: Ringfeder
- 18:: Blattfeder
- 19:: Spule
- 20:: Steckhülse
- 21,22:: Rasthaken
- 23:: Stift
- 24:: Hülse
- 25:: Rasthaken (an Hülse)
- 26:: Schieber
- 27:: Kurvenschieber
- 28:: Schalter
- 29:: Kurvenscheibe
- 30:: Schaltelement
- 31:: Nut (in Kurvenscheibe)
- 32:: Führungsdom
- 33:: Kulisse (an Kurvenschieber)
- 34:: Flansch
- 35:: Schaltschieber

## Patentansprüche

1. Zündschloß, insbesondere für ein mit einem elektronischen Schlüssel (3) zusammenwirkendes Zündschloßsystem (1) in einem Kraftfahrzeug, mit einem Signalerzeugungslement (6), und mit einem aus einer Ausgangsstellung in wenigstens eine Betätigungsstellung bewegbaren, als drehbeweglichen Rotor ausgestalteten Betätigungselement (5), wobei das Betätigungselement (5) in der Betätigungsstellung mit dem Signalerzeugungselement (6) zur Erzeugung eines Signals, insbesondere von Bordnetzsignalen für das Kraftfahrzeug zusammenwirkt, wobei das Signalerzeugungselement (6) aus einem Winkelencoder in der Art eines Drehwinkelsensors besteht, und wobei der Winkelencoder (6) die Signale in bestimmten Stellungen des Betätigungselements (5) in der Art von Schaltpositionen des Betätigungselements (5) erzeugt, **dadurch gekennzeichnet, daß** das Betätigungselement (5) mit einer Blattfeder (18) derart zusammenwirkt, daß eine Rastung in den verschiedenen Positionen des Betätigungselements (5) ermöglicht ist und/oder eine Rückstellung des Betätigungselements (5) aus der "Motor Start"-Stellung bewirkt wird.

2. Zündschloß nach Anspruch 1, **dadurch gekennzeichnet, daß** das Signalerzeugungselement aus mindestens einem elektrischen Schaltelement (30) und/oder einem Sensorelement, das von einer am Betätigungselement (5) angeordneten Kurvenscheibe (29) betätigt wird, besteht.

3. Zündschloß nach Anspruch 1 oder 2, **dadurch gekennzeichnet, daß** der Winkelencoder (6) die Winkelstellung, in der sich das Betätigungselement (5) befindet, absolut ausgibt.

4. Zündschloß nach Anspruch 1, 2 oder 3, **dadurch gekennzeichnet, daß** die Schaltpositionen des Winkelencoders (6) mittels Software festlegbar sind.

5. Zündschloß nach einem der Ansprüche 1 bis 4, **dadurch gekennzeichnet, daß** mindestens ein elektrischer Schalter (10) zusätzlich zum Signalerzeugungselement (6) mit dem Betätigungselement (5) zusammenwirkt, insbesondere zur Redundanz für mindestens ein Bordnetzsignal und/oder zur Überprüfung der Funktion des Winkelencoders (6).

6. Zündschloß nach einem der Ansprüche 1 bis 5, **dadurch gekennzeichnet, daß** der Winkelencoder (6) über eine stromsparende Taktschaltung, die beispielsweise mittels einer Pulsweitenmodulation (PWM), eines Timers o. dgl. arbeitet, angesteuert wird, wobei insbesondere der Winkelencoder (6) im Ruhezustand zur Minimierung des Ruhestroms getaktet betrieben wird.

7. Zündschloß nach einem der Ansprüche 1 bis 6, **dadurch gekennzeichnet, daß** ein Magnet (12) mit dem Betätigungselement (5) gekoppelt ist, und daß vorzugsweise der Winkelencoder (6) als Magnetfeldsensor, insbesondere in der Art eines Hallsensors, ausgestaltet ist.

8. Zündschloß nach einem der Ansprüche 1 bis 7, **dadurch gekennzeichnet, daß** nach Montage des Magneten (12) dessen Nullstellung in der Ausgangsstellung des Betätigungselements (5) über einen Softwareabgleich, beispielsweise beim Endprüfen als Abschluß der Herstellung des Zündschlosses (2), kalibriert wird.

9. Zündschloß nach einem der Ansprüche 1 bis 8, **dadurch gekennzeichnet, daß** der Magnet (12) an einer Drehscheibe (11) angeordnet ist, und daß die Drehscheibe (11) mit dem Rotor (5) gekoppelt ist.

10. Zündschloß nach einem der Ansprüche 1 bis 9, **dadurch gekennzeichnet, daß** der Magnet (12) über ein Getriebe (11) mit dem Betätigungselement (5) gekoppelt ist, daß vorzugsweise das Getriebe (11) in der Art eines Zahnradantriebs o. dgl. ausgebildet ist, und daß weiter vorzugsweise ein Magnet (12) an einem Zahnrad zur Erzeugung eines speziellen Magnetfeldes für die Aktivierung des Winkelencoders (6) aus dem Ruhezustand angeordnet ist.

11. Zündschloß nach einem der Ansprüche 1 bis 10, **dadurch gekennzeichnet, daß** der Schlüssel (3) in eine Aufnahme (9) am Betätigungselement (5) einsteckbar ist, und daß vorzugsweise eine Kulisse (13) mit der Drehscheibe (11) und/oder mit der Kurvenscheibe (29) zusammenwirkt, derart daß die Steckbewegung des Schlüssels (3) auf die Drehscheibe (11) und/oder die Kurvenscheibe (29) übertragen wird.

12. Zündschloß nach einem der Ansprüche 1 bis 11, **dadurch gekennzeichnet, daß** das Betätigungselement (5) mit einer Stecksperre (15) derart zusammenwirkt, daß nur ein Schlüssel (3) in die Aufnahme (9) am Betätigungselement (5) eingeführt werden kann, der mechanisch die richtige Kontur (14) aufweist, daß vorzugsweise das Betätigungselement (5) mit einer Drehsperre (16) derart zusammenwirkt, daß ein Drehen des Betätigungselements (5) nur in der Endposition des gesteckten Schlüssels (3) in der Aufnahme (9) ermöglicht ist, daß weiter vorzugsweise der gesteckte Schlüssel (3) durch eine Ringfeder (17) in der Aufnahme (9) verrastet ist, und daß noch weiter vorzugsweise das Abziehen des Schlüssels (3) im gedrehten Zustand des Betätigungselements (5) aus der Aufnahme (9) durch eine Verengung im Gehäuse (4) des Zündschlosses (2) verhindert ist.

13. Zündschloß nach einem der Ansprüche 1 bis 12, **dadurch gekennzeichnet, daß** eine Spule (19) im Zündschloß (2) zur Energieübertragung auf den in der Aufnahme (9) befindlichen Schlüssel (3) angeordnet ist, wobei die Spule (19) auf einem gespritzten Spulenträger umwickelt wird und anschließend in einem weiteren Spritzvorgang der Spulenkörper mit aufgewickelter Spule (19) mit dem Gehäusevorderteil (4') für das Zündschloß (2) umspritzt wird.

14. Zündschloß nach einem der Ansprüche 1 bis 13, **dadurch gekennzeichnet, daß** das Betätigungselement (5) wenigstens teilweise in einem Zylindervorderteil (5') angeordnet ist, daß vorzugsweise das Zylindervorderteil (5') mittels Steckhülsen (20) mit einer Leiterplatte (8) elektrisch verbunden ist, und daß weiter vorzugsweise die Steckhülsen (20) als SMD-Bauteile und/oder als eingepreßte Actionpins ausgestaltet sind.

15. Zündschloß nach einem der Ansprüche 1 bis 14, **dadurch gekennzeichnet, daß** das Betätigungselement (5) wenigstens teilweise in einem Zylinderhinterteil (5") angeordnet ist, daß vorzugsweise die Leiterplatte (8) mittels Rasthaken (21) auf dem Zylinderhinterteil (5") verrastet ist, und daß weiter vorzugsweise die Rasthaken (21), die insbesondere in weicher Art ausgebildet sind, mit einem Gehäusehinterteil (4") des Zündschlosses (2) verklemmt sind.

16. Zündschloß nach einem der Ansprüche 1 bis 15, **dadurch gekennzeichnet, daß** das Zündschloß (2) mittels Stifte (23) mit Preßrippen an einem Gehäusevorderteil (4') des Zündschlosses (2), insbesondere im wesentlichen zentriert, befestigt ist, und daß vorzugsweise seitliche Rasthaken (22) am Zylinderhinterteil (5") an Hinterschnitten im Gehäusevorderteil (4') eingreifen.

17. Zündschloß nach einem der Ansprüche 1 bis 16, **dadurch gekennzeichnet, daß** die Kurvenscheibe (29) am Betätigungselement (5), insbesondere am Rotor, aufgesteckt ist, daß vorzugsweise die Kurvenscheibe (29) am Außenumfang mit dem Zylinderhinterteil (5") verrastet ist, und daß weiter vorzugsweise Schaltschieber (35) für die Betätigung der Schalt - und/oder Sensorelemente (30) in der Kurvenscheibe (29) angeordnet sind.

18. Zündschloß nach einem der Ansprüche 1 bis 17, **dadurch gekennzeichnet, daß** die Schalt- und/oder Sensorelemente (30) über Nuten (31) in der Kurvenscheibe (29) zur Betätigung angelenkt sind, und daß vorzugsweise die Schalt- und/oder Sensorelemente (30) als durch die Nuten (31) zwangsgeführte Schiebeschalter ausgebildet sind.

19. Zündschloß nach einem der Ansprüche 1 bis 18, **dadurch gekennzeichnet, daß** in der Aufnahme (9) am Betätigungselement (5) eine bewegliche Hülse (24) angeordnet ist, die durch das Einstecken des Schlüssels (3) bewegt wird, daß vorzugsweise die Hülse (24) wenigstens zwei, am Betätigungselement (5) angreifende Rasthaken (25) aufweist, daß weiter vorzugsweise die Rasthaken (25) mit zwei Schiebern (26) mit unterschiedlichen Stößellängen zusammenwirken, und daß noch weiter vorzugsweise die Schieber (26) mittels Führungsdomen (32) in zugehörige Kulissen (33) von Kurvenschiebern (27) eingreifen, derart daß die Bewegung der Hülse (24) zur Erzeugung von Schaltsignalen um in etwa 90° nach außen umgelenkt wird.

## Claims

1. Ignition lock, in particular for an ignition lock system (1) operating with an electronic key (3) in a motor vehicle, comprising a signal generating element (6) and an activating element (5) configured as a rotating rotor which can be moved from a starting position into at least one activating position, wherein the activating element (5) in the activating position operates with the signal generating element (6) to generate a signal, in particular signals for the vehicle electrical system, wherein the signal generating element (6) consists of an angle encoder in the form of a rotary angle sensor, and wherein the angle encoder (6) generates the signals in specific positions of the activating element (5) in the form of switching positions of the activating element (5), **characterised in that** the activating element (5) operates with a leaf spring (18) such that locking is possible in the different positions of the activating element (5) and/or the activating element (5) is restored from the "motor start" position.

2. Ignition lock according to claim 1, **characterised in that** the signal generating element consists of at least one electric switching element (30) and/or a sensor element which is activated by a cam disc (29) arranged on the activating element (5).

3. Ignition lock according to claim 1 or 2, **characterised in that** the angle encoder (6) outputs absolutely the angular position in which the activating element (5) is located.

4. Ignition lock according to claim 1, 2 or 3, **characterised in that** the switching positions of the angle encoder (6) can be determined by means of software.

5. Ignition lock according to any one of claims 1 to 4, **characterised in that** at least one electric switch (10) operates in addition to the signal generating element (6) with the activating element (5), in particular for redundancy for at least one signal of the vehicle electrical system and/or for checking the function of the angle encoder (6).

6. Ignition lock according to any one of claims 1 to 5, **characterised in that** the angle encoder (6) is driven by a power-saving clocked circuit, which operates for example by means of pulse width modulation (PWM), a timer or the like, wherein in particular the angle encoder (6) is operated in a clocked manner in the idle state to minimise the closed current.

7. Ignition lock according to any one of claims I to 6, **characterised in that** a magnet (12) is coupled to the activating element (5) and **in that** preferably the angle encoder (6) is configured as a magnetic field sensor, in particular in the manner of a Hall sensor.

8. Ignition lock according to any one of claims 1 to 7, **characterised in that** after the assembly of the magnet (12) its zero position is calibrated in the starting position of the activating element (5) by a software comparison, for example during the final testing at the end of the production of the ignition lock (2).

9. Ignition lock according to any one of claims 1 to 8, **characterised in that** the magnet (12) is arranged on a rotary disc (11) and **in that** the rotary disc (11) is coupled to the rotor (5).

10. Ignition lock according to any one of claims 1 to 9, **characterised in that** the magnet (12) is coupled by a gear (11) to the activating element (5), **in that** preferably the gear (11) is configured in the manner of a gear drive or the like, and **in that** also preferably a magnet (12) is arranged on a gear to generate a special magnetic field for activating the angle encoder (6) from the idle state.

11. Ignition lock according to any one of claims 1 to 10, **characterised in that** the key (3) can be inserted into a holder (9) on the activating element (5) and **in that** preferably a gate (13) cooperates with the rotary disc (11) and/or with the cam disc (29) such that the insertion movement of the key (3) is transmitted to the rotary disc (11) and/or the cam disc (29).

12. Ignition lock according to any one of claims 1 to 11, **characterised in that** the activating element (5) cooperates with an insertion stop (15) such that only one key (3) can be inserted into the holder (9) on the activating element (5), which has the right contour (14) mechanically, **in that** preferably the activating element (5) cooperates with a rotation stop (16) such that rotation of the activating element (5) is only possible in the end position of the inserted key (3) in the holder (9), **in that** also preferably the inserted key (3) is locked by an annular spring (17) in the holder (9), and **in that** furthermore preferably the removal of the key (3) from the holder (9) in the rotated state of the activating element (5) is prevented by a restriction in the housing (4) of the ignition lock (2).

13. Ignition lock according to any one of claims 1 to 12, **characterised in that** a coil (19) is arranged in the ignition lock (2) for the transfer of energy to the key (3) located in the holder (9), wherein the coil (19) is wound onto an injected coil support and then in a further injection process the coil body with a wound coil (19) is injected round with the front housing part (4') for the ignition lock (2).

14. Ignition lock according to any one of claims 1 to 13, **characterised in that** the activating element (5) is arranged at least partly in a front cylinder part (5'), **in that** preferably the front cylinder part (5') is connected electrically by means of push-in sleeves (20) to a circuit board (8), and **in that** also preferably the push-in sleeves (20) are configured as SMD components and/or as pressed-in action pins.

15. Ignition lock according to any one of claims 1 to 14, **characterised in that** the activating element (5) is arranged at least partly in a rear cylinder part (5"), **in that** preferably the circuit board (8) is locked by means of locking hooks (21) on the rear cylinder part (5"), and **in that** preferably the locking hooks (21), which are configured in particular to be soft, are clamped by a rear housing part (4") of the ignition lock (2),

16. Ignition lock according to any one of claims 1 to 15, **characterised in that** the ignition lock (2) is secured by means of pins (23) with pressing ribs on a front housing part (4') of the ignition lock (2), in particular centred, and **in that** preferably lateral locking hooks (22) on the rear cylinder part (5") engage with undercuts in the front housing part (4').

17. Ignition lock according to any ane of claims 1 to 16, **characterised in that** the cam disc (29) is fitted onto the activating element (5), in particular onto the rotor, **in that** preferably the cam disc (29) is locked on the outer circumference to the rear cylinder part (5"), and **in that** also preferably switch sliders (35) are arranged for activating the switch and/or sensor elements (30) in the cam disc (29).

18. Ignition lock according to any one of claims 1 to 17, **characterised in that** the switch and/or sensor elements (30) are articulated by grooves (31) in the cam disc (29) for activation, and **in that** preferably the switch and/or sensor elements (30) are configured as slide switches forcibly guided in the grooves (31).

19. Ignition lock according to any one of claims 1 to 18, **characterised in that** in the holder (9) on the activating element (5) a movable sleeve (24) is arranged which is moved by inserting the key (3), **in that** preferably the sleeve (24) has at least two locking hooks (25) engaging with the activating element (5), **in that** also preferably the locking hooks (25) cooperate with two slides (26) with different slide lengths and **in that** also preferably the slides (26) engage by means of guiding domes (32) in associated gates (33) of cam discs (27), such that the movement of the sleeve (24) is deflected outwards by about 90° to generate switching signals.

## Revendications

1. Serrure de contact d'allumage, en particulier pour un système de serrure de contact d'allumage (1), coopérant avec une clé électronique (3), dans un véhicule à moteur, comportant un élément (6) générateur de signaux, et un élément de manoeuvre (5), pouvant passer d'une position de départ à au moins une position de manoeuvre et configuré comme un rotor mobile en rotation, l'élément de manoeuvre (5) coopérant, dans sa position de manoeuvre, avec l'élément (6) générateur de signaux dans le but de produire un signal, en particulier des signaux de réseau de bord pour le véhicule à moteur, l'élément (6) générateur de signaux étant constitué d'un codeur angulaire se présentant sous forme d'un capteur d'angle de rotation, et le codeur angulaire (6) produisant les signaux pour certaines positions de l'élément de manoeuvre (5) sous forme de positions de commutation de l'élément de manoeuvre (5), **caractérisée en ce que** l'élément de manoeuvre (5) coopère avec un ressort à lames (18) de telle sorte qu'il en résulte la possibilité d'un encliquètement dans les différentes positions de l'élément de manoeuvre (5), et/ou la réalisation d'un retour de l'élément de manoeuvre (5) à partir de la position "Motor Start".

2. Serrure de contact d'allumage selon la revendication 1, **caractérisée en ce que** l'élément générateur de signaux est constitué d'au moins un élément commutateur électrique (30) et d'au moins un élément capteur, qui est actionné par un disque à cames (29) disposé contre l'élément de manoeuvre (5).

3. Serrure de contact d'allumage selon la revendication 1 ou 2, **caractérisée en ce que** le codeur angulaire (6) envoie en sortie en valeur absolue la position angulaire dans laquelle se trouve l'élément de manoeuvre (5).

4. Serrure de contact d'allumage selon la revendication 1, 2 ou 3, **caractérisée en ce que** les positions de commutation du codeur angulaire (6) peuvent être spécifiées à l'aide d'un logiciel.

5. Serrure de contact d'allumage selon l'une des revendications 1 à 4, **caractérisée en ce qu'**au moins un commutateur électrique (10) coopère, en plus de l'élément (6) générateur de signaux, avec l'élément de manoeuvre (5), notamment pour assurer une redondance pour au moins un signal de réseau de bord et/ou pour le contrôle de la fonction du codeur angulaire (6).

6. Serrure de contact d'allumage selon l'une des revendications 1 à 5, **caractérisée en ce que** le codeur angulaire (6) est excité par l'intermédiaire d'un circuit d'horloge à faible consommation de courant, qui travaille par exemple à l'aide d'une modulation d'impulsions en largeur (PWM), d'un synchronisateur ou analogues, en particulier le codeur angulaire (6) étant, quand il est au repos, exploité d'une manière synchronisée pour minimiser le courant de repos.

7. Serrure de contact d'allumage selon l'une des revendications 1 à 6, **caractérisée en ce qu'**un aimant (12) est couplé à l'élément de manoeuvre (5), et que de préférence le codeur angulaire (6) est configuré comme un capteur de champ magnétique, se présentant en particulier sous forme d'une sonde de Hall.

8. Serrure de contact d'allumage selon l'une des revendications 1 à 7, **caractérisée en ce que**, après le montage de l'aimant (12), sa position zéro est étalonnée dans la position de départ de l'élément de manoeuvre (5) par l'intermédiaire d'un réglage par logiciel, en particulier lors du contrôle final, en tant qu'opération finale de la fabrication de la serrure de contact d'allumage.

9. Serrure de contact d'allumage selon l'une des revendications 1 à 8, **caractérisée en ce que** l'aimant (12) est disposé contre un disque tournant (11), et que le disque tournant (11) est couplé au rotor (5).

10. Serrure de contact d'allumage selon l'une des revendications 1 à 9, **caractérisée en ce que** l'aimant (12) est couplé à l'élément de manoeuvre (5) par l'intermédiaire d'un engrenage (11), que de préférence l'engrenage (11) est configuré sous forme d'un engrenage à roue dentée ou analogues, et que de plus et de préférence un aimant (12) est disposé contre une roue dentée, pour produire un champ magnétique spécial destiné à l'activation du codeur angulaire (6) à partir de la position de repos.

11. Serrure de contact d'allumage selon l'une des revendications 1 à 10, **caractérisée en ce que** la clé (3) peut être enfichée dans un logement (9) aménagé sur l'élément de manoeuvre (5), et que de préférence une coulisse (13) coopère avec le disque tournant (11) et/ou avec le disque à cames (29), de telle sorte que le mouvement d'enfichage de la clé (3) soit transmis au disque tournant (11) et/ou au disque à cames (29).

12. Serrure de contact d'allumage selon l'une des revendications 1 à 11, **caractérisée en ce que** l'élément de manoeuvre (5) coopère avec un arrêt d'enfichage (15) de telle sorte que seule une clé (3) puisse être insérée dans l'évidement (9) aménagé dans l'élément de manoeuvre (5) qui d'un point de vue mécanique présente le contour correct (14), que de préférence l'élément de manoeuvre (5) coopère avec un arrêt de rotation (16), qu'une rotation de l'élément de manoeuvre (5) n'est possible que dans la position finale de la clé (3) enfichée dans le logement (9), que de plus et de préférence la clé enfichée (3) est enclenchée par un ressort-bague (17) dans le logement (9) et que, d'une manière encore plus préférée, l'extraction de la clé (3), quand l'élément de manoeuvre (5) a subi une rotation, à partir du logement (9), est empêchée par un rétrécissement aménagé dans le boîtier (4) de la serrure de contact d'allumage (2).

13. Serrure de contact d'allumage selon l'une des revendications 1 à 12, **caractérisée en ce qu'**une bobine (19) est disposée dans la serrure de contact d'allumage (2) pour le transfert d'énergie à la clé (3) se trouvant dans le logement (9), la bobine (19) étant enveloppée d'un support de bobine appliqué par injection, puis, dans une étape supplémentaire d'injection, le corps de la bobine est entouré de la bobine enroulée (19), avec la partie antérieure (4') du boîtier destinée à la serrure de contact d'allumage (2).

14. Serrure de contact d'allumage selon l'une des revendications 1 à 13, **caractérisée en ce que** l'élément de manoeuvre (5) est disposé au moins partiellement dans une partie antérieure de cylindre (5'), que de préférence la partie antérieure de cylindre (5') est électriquement reliée, par l'intermédiaire de douilles enfichables (20), à une carte imprimée (8), et que de plus et de préférence les douilles d'enfichage (20) sont configurées comme des composants SMD et/ou des Actionpins incrustés.

15. Serrure de contact d'allumage selon l'une des revendications 1 à 14, **caractérisée en ce que** l'élément de manoeuvre (5) est au moins partiellement disposé dans une partie postérieure de cylindre (5"), que de préférence la carte imprimée (8) est encliquetée sur la partie postérieure de cylindre (5") à l'aide de crochets d'arrêt (21), et que de plus et de préférence les crochets d'arrêt (21), qui en particulier sont configurés en un matériau tendre, sont serrés à l'aide d'une partie postérieure de boîtier (4") de la serrure de contact d'allumage (2).

16. Serrure de contact d'allumage selon l'une des revendications 1 à 15, **caractérisée en ce que** la serrure de contact d'allumage (2) est fixée à l'aide de goujons (23) comportant des nervures de compression à une partie antérieure de boîtier (4') de la serrure de contact d'allumage (2), de préférence en position essentiellement centrée, et que de préférence des crochets d'arrêt latéraux (22) entrent en prise, au niveau de la partie postérieure de cylindre (5"), avec des contre-dépouilles aménagées dans la partie antérieure de boîtier (4').

17. Serrure de contact d'allumage selon l'une des revendications 1 à 16, **caractérisée en ce que** le disque à cames (29) est enfoncé sur l'élément de manoeuvre (5), en particulier sur le rotor, que de préférence le disque à cames (29) est enclenché, au niveau de sa périphérie extérieure, à la partie postérieure de cylindre (5"), et que de plus et de préférence des coulisseaux de commutation (35), destinés à la manoeuvre des éléments de commutation et/ou capteurs (30), sont disposés dans le disque à cames (29).

18. Serrure de contact d'allumage selon l'une des revendications 1 à 17, **caractérisée en ce que** les éléments de commutation et/ou capteurs (30) sont, par l'intermédiaire de rainures (31), articulés dans le disque à cames (29) pour assurer la manoeuvre, et que de préférence les éléments de commutation et/ou capteurs (30) sont configurés sous forme de commutateurs à coulisse, guidés à force à travers les rainures (31).

19. Serrure de contact d'allumage selon l'une des revendications 1 à 18, **caractérisée en ce qu'**une douille mobile (24) est disposée dans le logement (9) aménagé dans l'élément de manoeuvre (5), douille qui est mobile sous l'effet de l'enfichage de la clé (3), que de préférence la douille (24) comprend au moins deux crochets d'arrêt (25) en prise avec l'élément de manoeuvre (5), que de plus et de préférence les crochets d'arrêt (25) coopèrent avec deux coulisseaux (26) ayant des longueurs de coulisseau différentes, et que, de plus et de préférence, les coulisseaux (26) entrent en prise avec des mandrins de guidage (32) disposés dans les coulisses correspondantes (33) de coulisseaux à cames (27), de telle sorte que le déplacement de la douille (24) soit basculé vers l'extérieur sur environ 90° pour permettre la production de signaux de commutation.
